**Europäisches Patentamt**

**European Patent Office**

**Office européen des brevets**

(11) Veröffentlichungsnummer: **0 134 284**
**A1**

## (12) EUROPÄISCHE PATENTANMELDUNG

(21) Anmeldenummer: **83108606.1**

(22) Anmeldetag: **01.09.83**

(51) Int. Cl.⁴: **F 16 N 39/00**
**F 01 M 11/00**

(43) Veröffentlichungstag der Anmeldung:
**20.03.85 Patentblatt 85/12**

(84) Benannte Vertragsstaaten:
**CH FR GB IT LI SE**

(71) Anmelder: **Hechler, Hans, Dipl.-Kauf.**
**Kurweg 80a**
**D-6719 Carlsberg(DE)**

(71) Anmelder: **Grimmer, Johannes**
**Dürerstrasse 12**
**D-6700 Ludwigshafen/Rhein(DE)**

(72) Erfinder: **Hechler, Hans, Dipl.-Kauf.**
**Kurweg 80a**
**D-6719 Carlsberg(DE)**

(72) Erfinder: **Grimmer, Johannes**
**Dürerstrasse 12**
**D-6700 Ludwigshafen/Rhein(DE)**

(54) **Verfahren zur Verringerung der Alterung des Schmieröls in Brennkraftmaschinen.**

(57) Bei dem erfindungsgemäßen Verfahren zur Verringerung der Alterung des Schmieröls in Brennkraftmaschinen und damit zur Verlängerung der Verwendbarkeit des Schmieröls wird der Schmierölvorrat in der Ölwanne und/oder bei Trockensumpfschmierung in dem gesonderten Schmierölbehälter dauernd durch eine Gasschicht durchströmt, die aus einem von freiem Sauerstoff oder einem anderen, die Schmierölqualität negativ beeinflussenden Stoff freien Gas besteht. Damit ist gewährleistet, daß schädliche Fremdstoffe, wie Wasserdampf, Reste von Kraftstoffgemischen etc. ausgetrieben werden. Als Schutzgasschicht kommt u.a. Abgas der Brennkraftmaschine infrage.

./...

Croydon Printing Company Ltd.

EP 0 134 284 A1

-7-

## Verfahren zur Verringerung der Alterung des Schmieröls in Brennkraftmaschinen

Die Erfindung betrifft ein Verfahren zur Verringerung der Alterung des Schmieröls in Brennkraftmaschinen und damit zur Verlängerung der Verwendbarkeit des Schmieröls.

Die Alterung des Schmieröls in Brennkraftmaschinen, und damit der Verlust an Schmierfähigkeit und die Notwendigkeit eines Ölwechsels, beruht hauptsächlich auf dem Kontakt des Schmieröls mit dem Luft-Sauerstoff und/oder in der Luft enthaltenem Wasser. Hiermit sind gewisse Oxidationsvorgänge im Schmieröl verbunden, die die Alterung derselben beschleunigen. Der Schmierölwechsel, der hierdurch erforderlich wird, wirkt sich insbesondere bei Großmotoren wirtschaftlich sehr stark aus, weil die erforderliche Ölmenge sehr groß ist. Solche Großmotore sind beispielsweise Brennkraftmaschinen, die für den Schiffsantrieb benutzt werden, mit anderen Worten also Schiffsmotoren, aber auch die in Blockkraftwerken benutzten Motoren. Blockkraftwerke werden in immer stärkerem Maße eingesetzt, weil sie durch Erzeugung einerseits elektrischer Energie und andererseits von Wärmeenergie mit einem überaus hohen Wirkungsgrad arbeiten.

Der Erfindung liegt nun die Aufgabe zugrunde, die Alterung des Schmieröls zu verringern bzw. zu verzögern oder ganz zu verhindern. Dadurch wird einmal der Aufwand für die Anschaffung von Neuöl herabgesetzt und zum anderen der Anfall von Altöl, das ja dann auch auf irgendeine Art und Weise beseitigt werden muß (wobei die Umweltschutzbedingungen eingehalten werden müssen), verringert. Beides führt zu einer Herabsetzung der Kosten des Betriebs des betreffenden Motors.

Diese Aufgabe wird nach der Erfindung dadurch gelöst, daß dem Schmierölvorrat in der Ölwanne oder, bei Trockensumpfschmierung, in dem dann vorhandenen gesonderten Schmierölbehälter dauernd durch eine Gasschicht überlagert oder überströmt wird, die aus einem von freiem Sauerstoff oder einem anderen, die Schmierölqualität negativ beeinflussenden freien Gas besteht.

Dadurch wird ein Kontakt des sich ja in der Hauptsache in der Ölwanne oder in dem sonstigen Ölvorratsbehälter befindlichen Öls mit Luft, und damit mit dem Luftsauerstoff und Wasserdampf, verhindert, wodurch die Alterung des Öls erheblich verzögert wird.

Man kann das erfindungsgemäße Verfahren beispielsweise in der Weise ausüben, daß man der Ölwanne bzw. dem sonstigen Schmierölbehälter aus einer Vorratsflasche Stickstoff über ein Druckregelventil zuleitet, der beispielsweise als Schweiß-Schutzgas in Form von Flaschen im Handel erhältlich ist, oder aber auch irgend ein anderes inertes Gas, beispielsweise ein Edelgas, oder auch Kohlendioxid oder Kohlenmonoxid, oder eine Mischung solcher Gase.

Bei Brennkraftmaschinen, die nicht dauernd laufen, würde es sich aus Einsparungsgründen im letztgenannten Fall empfehlen, in die Gaszuleitung zu der Ölwanne oder zu dem sonstigen Schmierölbehälter ein Ventil einzuschalten, das automatisch bei Laufen der brennkraftmaschine geöffnet und kurz nach Stillstand derselben geschlossen wird, damit die schädlichen Gasgemische vom Inertgas vollständig ausgetrieben werden. Bei Stillstand der Brennkraftmaschine entsteht ja kein Verlust an diesem Schutzgas, und es besteht denn auch keine Notwendigkeit, weiteres Schutzgas zuzuleiten.

0134284

Der Aufwand für eine solche Vorrichtung ist naturgemäß nicht ganz gering, und deshalb dürfte sich die Anwendung dieser Verfahren besonders bei Großmotoren der eingangs geschilderten Art besonders rentieren; eine Rentabilität kann aber auch beispielsweise bei Kraftfahrzeug-Antriebsmotoren gegeben sein. Besonders bei solchen Kraftfahrzeug-Antriebsmotoren, aber natürlich auch bei den anderen genannten, größeren Motoren bietet sich, falls diese mit einem unter dem stöchiometrischen Verhältnis liegenden Brennstoff-Luft-Verhältnis betrieben werden, so daß deren Abgas keinen freien Sauerstoff enthält, die Möglichkeit an, und das ist ein weiterer Erfindungsvorschlag, daß der Ölwanne bzw. dem sonstigen Schmierölbehälter, und zwar erforderlichenfalls über einen Druckminderer, Abgas der Brennkraftmaschine zugeleitet wird, weil dieses dann ja die Aufgabe einer Schutzschicht zwischen Öloberfläche und Luft ebenfalls erfüllen kann.

Bei Brennkraftmaschinen, deren Abgase nicht mit einem unter dem stöchiometrischen Verhältnis liegenden Brennstoff-Luft-Verhältnis betrieben werden, bei denen aber (und das ist bei den allermeisten Brennkraftmaschinen der Fall) nur in einem bestimmten Teillastbereich Bestandteile enthalten sind, die dem Schmieröl möglicherweise schädlich sein könnten, darunter beispielsweise Kohlenmonoxid, welches dem Schmieröl, das ja aus organischen Verbindungen sich zusammensetzt, Sauerstoff entzieht, kann das erfindungsgemäße Verfahren derart durchgeführt werden, daß der Ölwanne bzw. dem sonstigen Schmierölbehälter nur bei Überschreitung dieser Teillastgrenze ein Abgas oder ein vom Wasserdampf gereinigtes Abgas zugeleitet wird.

Auf jeden Fall kann gesagt werden, daß die Verwendung von Abgas als Schutzgasschicht für das Schmieröl aller Voraussicht nach die preiswerteste Lösung für die Verwirklichung der Erfindungs-Grundidee sein dürfte.

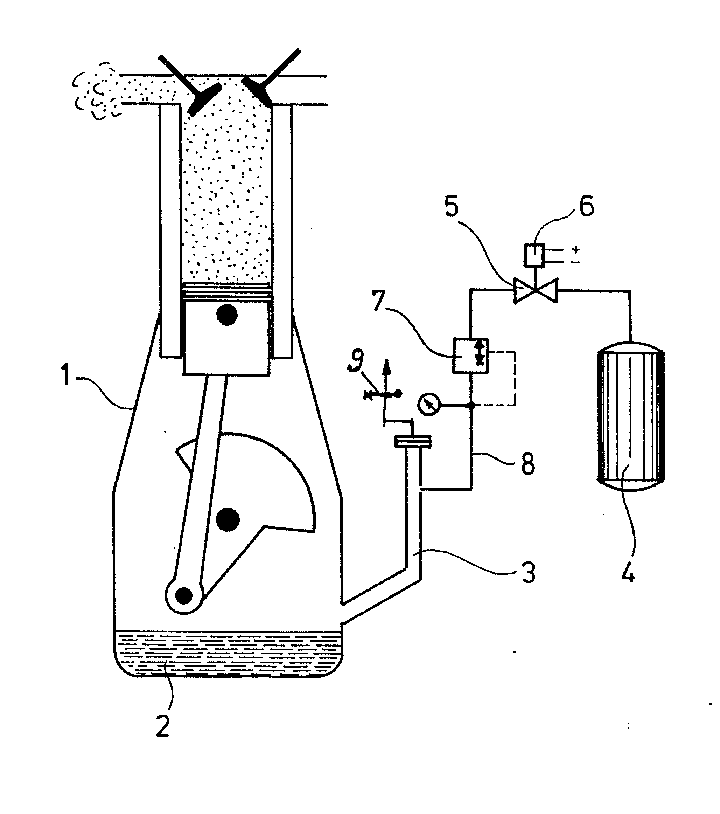

In der Zeichnung ist, ganz schematisch, ein Ausführungsbeispiel der Erfindung dargestellt, und zwar in Anwendung auf eine Brennkraftmaschine mit Ölsumpfschmierung, d.h. also mit Ölwanne. Die Zeichnung zeigt einen Schnitt durch eine Kolbenbrennkraftmaschine mit zur Verwirklichung des erfindungsgemäßen Verfahrens vorgesehenen zusätzlichen Teilen.

Der gesamte Motor ist mit 1 bezeichnet, seine Ölwanne mit 2 und der Öleinfüllstutzen mit 3. Aus einer Vorrats-Druckflasche 4 mit Absperrventil 5 und vorzugsweise elektromagnetischer Betätigungseinheit 6 kann Inertgas, wie z.B. Stickstoff, über ein Druckminderventil 7 und eine Leitung 8 in den Öleinfüllstutzen 3 geleitet werden. Diese Zuleitung kann, je nach Bedarf, auch intermitierend erfolgen, um an Inertgas zu sparen.

Anstelle der Vorratsflasche 4 mit Inertgas kann die Leitung 8 auch, gegebenenfalls über ein Druckminderventil, an die Abgasleitung der Brennkraftmaschine 1 angeschlossen werden. Dies ist einfach verständlich und deshalb nicht dargestellt. Damit eine ständige Inertgasströmung bei gleichen Druckverhältnissen gewährleistet ist, wird das Kurbelgehäuse mit einem Druckregelventil 9 ausgestattet.

Durch das erfindungsgemäße Verfahren wird das Schmieröl übrigens nicht nur vor dem Luftsauerstoff geschützt, sondern auch von dem Wasserdampf, der als Verbrennungsprodukt in die Ölwanne, d.h. also in das Kurbelgehäuse, eintreten kann, wodurch sogenannte Horn- und Crash-Anteile gebildet werden können, die dem Schmieröl schädlich sind. Dadurch entsteht nicht nur eine chemische Veränderung des Schmieröls, und damit eine Beeinträchtigung seiner Schmierfähigkeit, sondern auch eine Viskositätsveränderung, die sich ebenfalls ihrerseits nachteilig auf Korrosion und Schmierfähigkeit und somit auf die Standzeit des Schmieröls auswirkt.

Um der vorzeitigen Alterung des Schmieröls zu begegnen, wurden
in letzter Zeit bereits Filtereinheiten entwickelt, die im
Nebenschluß an den Schmierölkreislauf angeschlossen werden und
die eine Abtrennung nicht nur von größeren Festteilchen, sondern
auch von Wasser und niedersiedenden Bestandteilen aus dem
Schmieröl bewirken sollen, um damit ebenfalls die Alterung des
Schmieröls zu verringern und damit die Standzeit des Schmieröls
zu verlängern. Das ist aber insofern nur einigermaßen unvollständig, weil die das Schmieröl schädigenden Bestandteile auch
bei Anwendung solcher Nebenschlußfilter bereits erst einmal in
das Öl hineingelangen und dort schon eine gewisse Wirkung hervorrufen können, bevor sie dann, mehr oder weniger vollständig,
wieder ausgeschieden werden.

0134284

Liste der verwendeten Bezugsziffern

---

1    Gesamte Brennkraftmaschine
2    Ölwanne
3    Öleinfüllstutzen
4    Vorrats-Druckflasche für Inertgas
5    Absperrventil
6    Elektromagnetische Betätigungseinheit für 5
7    Druckminderventil
8    Leitung
9    Druckregelventil

PATENTANWALT DIPL.-ING. HARRY ROEVER

0134284

3 1 Aug. 1983

R/ge

P a t e n t a n s p r ü c h e

1. Verfahren zur Verringerung der Alterung des Schmieröls in Brennkraftmaschinen und damit zur Verlängerung der Verwendbarkeit des Schmieröls, insbesondere in Großmotoren, wie z.B. Schiffsmotoren oder in Blockkraftwerken, dadurch gekennzeichnet, daß der Schmierölvorrat in der Ölwanne und/oder, bei Trockensumpfschmierung, in dem gesonderten Schmierölbehälter und/oder sonstigen Schmierölsystemen dauernd durch eine Gasschicht überlagert und/oder überströmt wird, die aus einem von freiem Sauerstoff oder einem anderen, die Schmierölqualität negativ beeinflussenden Stoff freien Gas besteht.

2. Verfahren nach Anspruch 1, dadurch gekennzeichnet, daß der Ölwanne bzw. dem sonstigen Schmierölbehälter aus einer Vorratsflasche Stickstoff oder ein anderes Inertgas, z.B. Edelgase oder Kohlendioxid, gegebenenfalls Kohlenmonoxid oder eine Mischung solcher Gase, zugeleitet wird.

3. Verfahren nach den Ansprüchen 1 und 2, dadurch gekennzeichnet, daß in der Gaszuleitung zur Ölwanne oder zum sonstigen Schmierölbehälter oder -system ein Druckregelventil eingeschaltet ist, das automatisch bei Laufen der Brennkraftmaschine geöffnet und bei Stillstand derselben zeitversetzt geschlossen wird.

4. Verfahren nach Anspruch 1 in Anwendung auf Brennkraftmaschinen, die mit einem unter dem stöchiometrischen Verhältnis liegenden Brennstoff-Luft-Verhältnis betrieben werden, so daß ihr Abgas keinen freien Sauerstoff enthält, dadurch gekennzeichnet, daß der Ölwanne bzw. dem sonstigen Schmierölbehälter oder -system, erforderlichenfalls über einen Druckminderer, ein Teil des Abgases oder ein von Wasser und anderen schädlichen Fremdstoffen gereinigtes Abgas der Brennkraftmaschine zugeleitet wird.

5.Verfahren nach Anspruch 1 in Anwendung auf Brennkraftmaschinen, deren Abgase nur in einem bestimmten Teillastbereich dem Schmieröl möglicherweise schädliche Bestandteile enthalten, dadurch gekennzeichnet, daß der Ölwanne bzw. dem sonstigen Schmierölbehälter oder -system nur bei Überschreitung dieser Teillastgrenze Abgas zugeleitet wird.

/3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-1 712 944 (SUMMERS) <br> * Seite 1, Zeilen 1-54; Seite 1, Zeile 73 - Seite 2, Zeile 36; Figuren 1-3 * | 1-5 | F 16 N 39/00 <br> F 01 M 11/00 |
| X | GB-A- 363 852 (ROHÖL-VERGASER) <br> * Seite 1, Zeile 13 - Seite 2, Zeile 41; Figuren 1,2 * | 1 | |
| X | US-A-2 888 913 (EMMETT) <br> * Spalte 2, Zeile 68 - Spalte 3, Zeile 4; Figur 2 * | 1-3 | |
| X | DE-A-2 541 616 (VOX LUMATIC) <br> * Seite 2, Anspruch 3 * | 1,2 | |

RECHERCHIERTE SACHGEBIETE (Int. Cl. 3)

F 16 N
F 01 M

Der vorliegende Recherchenbericht wurde für alle Patentansprüche erstellt.

| Recherchenort | Abschlußdatum der Recherche | Prüfer |
|---|---|---|
| DEN HAAG | 04-04-1984 | KOOIJMAN F.G.M. |